Europäisches Patentamt

(19) European Patent Office

Office européen des brevets

(11) Publication number: **0 123 098**
**A2**

(12) # EUROPEAN PATENT APPLICATION

(21) Application number: **84102679.2**

(22) Date of filing: **12.03.84**

(51) Int. Cl.³: **H 02 M 3/335**

(30) Priority: **28.03.83 US 479218**

(43) Date of publication of application:
**31.10.84 Bulletin 84/44**

(84) Designated Contracting States:
**DE FR GB**

(71) Applicant: INTRONICS, INC.

Newton Massachusetts(US)

(72) Inventor: Harlan, George H.
148 Merrymount Rd.
Quincy, Mass., 02169(US)

(74) Representative: Ebbinghaus, Dieter et al,
v. FÜNER, EBBINGHAUS, FINCK Patentanwälte
European Patent Attorneys Mariahilfplatz 2 & 3
D-8000 München 90(DE)

(54) Switching power supply regulation.

(57) Accurate low-loss regulation of the d-c electrical outputs delivered by each of a plurality of supply channels (26, 26′, 27) energized by pulses from a common power source (34) is achieved independently through low-power magnetic-circuit control of important switching effects by which power-gating inductive reactance is efficiently alternated between relatively high and low values. The required switching in each channel (26, 26′, 27) results from low-power substantially continuous electrical biasing of the control winding (8B) of a saturable reactance (8) by a transistorized network of relatively non-critical and inexpensive construction, which responds to differences between sensed outputs and a reference. Each pulse of power, which is to be gated to the output through the main (8A) winding of the reactance (8) is at first effectively blocked, because of the high impedance exhibited by that winding, until the magnetic material of the core becomes saturated, at which instant the inductive impedance of the main winding drops to a relatively negligible level, and power is then transferrable to the output during the remainder of the pulse duration. Magnetic biasing of the core material, by the control winding effectively shifts its hysteresis-loop and saturation characteristic, such that controllably longer or shorter times are required for applied power pulses of uniform amplitude to bring the core to saturation, thereby achieving desired regulation of the channel's power output.

./...

FIG.4

v. FÜNER    EBBINGHAUS    0123098

PATENTANWÄLTE    EUROPEAN PATENT ATTORNEYS

MARIAHILFPLATZ 2 & 3, MÜNCHEN 90

POSTADRESSE: POSTFACH 95 01 60, D-8000 MÜNCHEN 95

INTRONICS, INC.                    EPAB-31741.9

                                   12. März 1984


## SWITCHING POWER SUPPLY REGULATION


### Background of the Invention

The present invention relates to improvements in electrical power supplies and the like, in which regulation of output is achieved through unique and advantageous switching operations, and, in one particular aspect, to novel and improved electrical power converters of relatively low cost, bulk and complexity, in which accurate substantially independent regulation of adjustable outputs is developed in multiple channels by modulations readily produced via relatively simple and efficient control of magnetic biasing of reactance core material.

In some cases, installations of electrically-powered equipment must be made in remote, inaccessible, hazardous, or otherwise-isolated environments of use where unattended batteries, power cells or generators cannot be counted upon to supply the exacting demands of sophisticated equipment for electrical excitations at different input levels and with high precision under variable loading conditions. Land-based, marine and high-altitude stations of various communications links and networks provide common examples of such environments and of related needs for closely-regulated power supplies capable of satisfying, simultaneously, the different precision-power requirements of several pieces of equipment at such stations. And, even where less rigorous environmental conditions exist, it can nevertheless be distictly convenient, efficient and otherwise advantageous to derive from one source a multiple-output service of accurately-regulated power to accommodate a variety of loads and input specifications by way of a single compact power converter. As would be expected, related drain of energy for control, and endangering build-up of heat due to unavoidable losses, and uses of costly or bulky components in complicated networks, should of course be minimized in any such converter apparatus, although known past efforts have left room for substantial improvement along such lines. In that connection, one common practice has involved the very rapid switching of output from a d-c source, to produce alternating-polarity power pulses, which could be transformer-coupled to several output channels and there rectified and filtered to afford plural d-c outputs at desired voltage levels; however, as source and loading and environmentally-induced variations are encountered in such converters, the outputs will not remain regulated and stable, and it has therefore been known to pulse-width modulate the rapid switching so as to compensate for sensed output changes and maintain substantially constant output. High-power controlled semiconductor switching devices, which will serve such needs, together with their associated controls, tend to consume and dissipate significant power and to complicate the converter circuitry, expecially when it is sought to regulate closely to different levels in each channel while attempting to isolate the channels from one another as they experience different and changing loading.

0123098

As appears more fully hereinafter, improvements in respect of such power conversions are obtainable with the unique aid of saturable-core devices operated in accordance with teachings of this invention. It is noted, however, that some such devices, making deliberate use of magnetic saturating effects, have long been exploited in specifically-different ways in electrical controls where relatively small d-c signals can influence deliveries of large amounts of power to heavy loads, usually if resulting wave shape has not been an important factor. Further, saturable reactors have also been described in the context of a voltage regulator wherein half-cycles of a-c input to a transformer primary encounter more or less impedance depending upon automatic control of magnetic biasing of the cores of a pair of such reactors, in U.S. Patent No. 3,042,848. Saturations are exploited somewhat differently in the regulated power supply circuitry of U.S. Patent No. 4,315,304, where both transformer and inductance saturations occur in connection with transistorized signal processing networks. A switching power supply, which utilizes a saturable transformer in the biasing and shaping of outputs of power-switching transistors is considered in U.S. Patent No. 4,347,559, and like power supplies involving switching transistors in association with center-tapped saturable transformers appear in U.S. Patents Nos. 4,314,327 and 4,319,315. Other U.S. patents, which provide general background information concerning converters and regulators having some aims, features or characteristics in common with those of the present teachings, include Nos. 4,129,788 and 4,176,392 and 4,313,155 and 4,316,242 and 4,318,039.

Summary of the Invention

The present invention is aimed at improving the cost-effectiveness, efficiency and versatility of switching-type power supplies or converters, which offer accuracy, stabi-

0123098

lity and adjustability of highly-isolated outputs from multiple channels. In one preferred embodiment, the single-ended input to a main power transformer in such a supply involves unidirectional current pulses gated through the primary at a high repetition rate by a known form of transistorized pulsewidth-modulating network, the modulation there being effected in accordance with established practices involving automatic comparison of the output voltage from one channel with a reference voltage and resulting control of the width of the primary pulses so as to eliminate any significant voltage difference between the reference value and the value of output realized once the pulse-induced secondary voltages have been appropriately filtered. Simultaneously, secondary voltages induced by the same primary pulses are caused to appear in other auxiliary channels of the converter, the values being determined by the transformer turns ratios, and those secondary voltages, after appropriate filtering, would of course tend to develop outputs varying somewhat in slaved relation to the changes brought about in the primary pulsing in response to feedback and control exercised by the main channel. However, in each of the auxiliary channels, a separate and effectively isolated regulation of outputs is achieved by automatically switching the levels of inductive reactance exhibited by a main winding of a saturable-core device, which intervenes to pass to the filter and thence to the output only so much of induced secondary pulses as suffice to develop a prescribed output voltage for that channel. Relatively inexpensive transistorized control of the d-c current in a gate winding of the saturable-core device establishes magnetic biasing, which shifts the hysteresis-loop and saturation conditions experienced as the secondary pulses interact with the main winding and core. That biasing is effected in accord with sensed differences between the auxiliary channel output and a reference, with relatively little power and loss, and without high-speed switching. Although the regulating effects in the auxiliary channels have many of the attributes of complicated actively-generated pulse-width modulation, the secondary pulses essentially modulate themselves as they encounter and develop interaction with the substantially passive main winding and its simple magnetically-biased core.

Accordingly, it is one of the objects of this invention to provide novel and improved electrical power supply regulation by way of reactance changes, which occur when unidirectional power pulses en route to an output site are forced to traverse a main winding associated with a magnetically-saturable core and a gate winding, which controls magnetic bias for the core.

A further object is to provide unique and advantageous DC/DC converters having multiple regulated output channels, including channels wherein saturable-core reactances and associated control circuitry of relatively inexpensive construction operate efficiently and at low power to cause power pulses to experience modulations, which accurately maintain output voltages at selected variable levels.

Brief description of the drawings

Although the aspects of this invention, which are considered to be novel are expressed in the appended claims, further details as to preferred practices and as to further objects and features thereof may be most readily comprehended through reference to the following detailed description when taken in connection with the accompanying drawings, wherein:

Figure 1    provides a partially schematic and partially block-diagrammed representation of principal features of a preferred form of improved single-ended magnetically-switched regulated electrical supply;

Figure 2    illustrates portions of characteristic hysteresis loops for a magnetic-switching reactor under different magnetic-bias conditions;

Figure 3    graphically portrays time-coordinated relationships between pulses of applied electrical power and the saturations, which attend switchings as controlled by different biasing currents in a magnetic-switching reactor for an improved electrical supply in accordance with the present teachings; and

Figure 4    provides a partially schematic and partially block-diagrammed representation of an improved electrical supply including magnetically-switched regulated channels among a plurality of output channels for a multiple-output electrical supply system.

Detailed description of the preferred embodiments

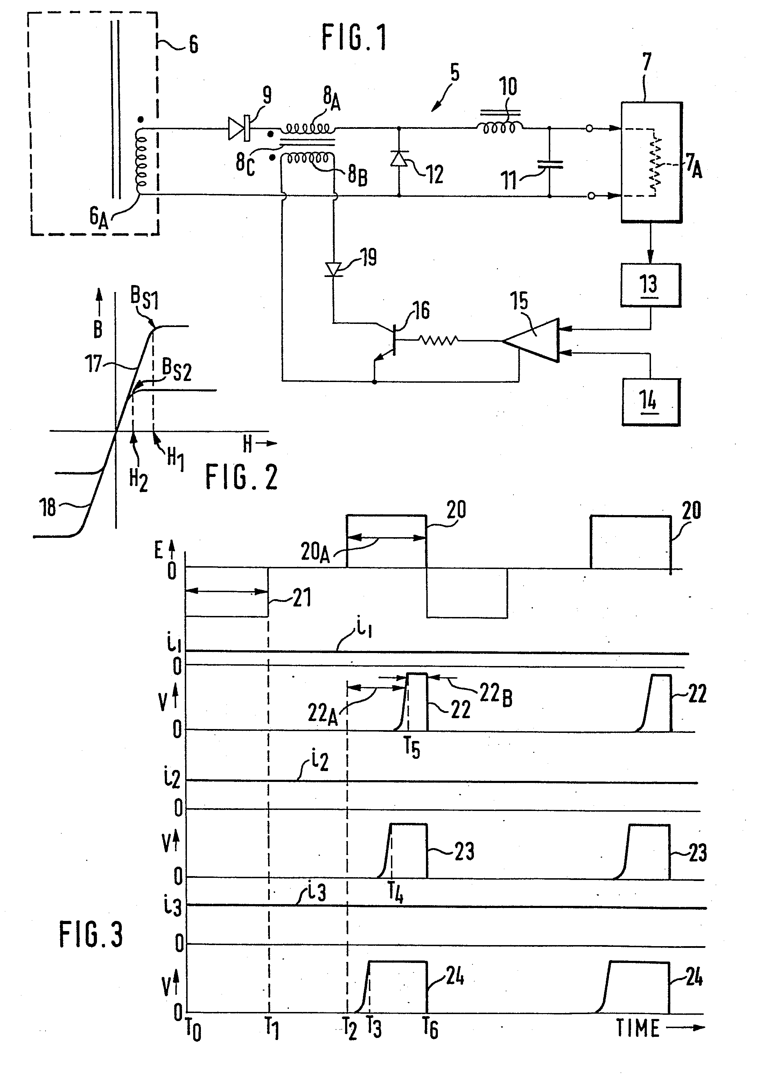

Having reference to the drawings, wherein like reference characters designate identical or corresponding parts throughout the several illustrations, and more particularly to fig. 1 thereof, one expression of the concepts involved in improved magnetically-switched regulated electrical supplies in accordance with this invention is characterized by a regulated-power channel 5 receiving electrical impulses from a power input stage 6 and delivering regulated d-c energy to the load $7_A$ of a power output stage 7. A key aspect of the regulation of output achieved via the channel 5 is contributed by switching actions of controlled inductive reactance 8, which includes a main winding $8_A$ and a control or gate-winding $8_B$, both associated with a saturable magnetic core $8_C$.

Characteristically, in converters, which serve generally like purposes, the power input stage 6 develops an electrical power-pulse output having a high repetition rate, as by transistorized switching or chopping of a battery d-c output, for example. For the "single-ended" network under discussion, it is considered that such power pulses are unidirectional and are delivered to the regulated power channel 5 via a transformer secondary $6_A$. Semiconductor diode 9 insures that no opposite-polarity signals, such as those involved in reset of the transformer, will be passed to the output-filtering circuitry, characterized by an inductance 10 and capacitor 11, and a clamping diode 12 assisting in clamping voltage to a desired level at its site. Without active regulation taking place in channel 5, there would not be the full intended output, inasmuch as the inductive reactance exhibited by main winding $8_A$ would significantly tend to block passage of the power pulses to the filter and output stage 7; in accordance with known techniques, material of core $8_C$, and the construction and disposition of main winding $8_A$, are selected and designated to develop those functional characteristics. However, control or gate winding $8_B$ is arranged and energized to develop in the core material such magnetic bias as will allow saturation to occur at controllably earlier or later times after the power pulses encounter and commence interaction with the main winding $8_A$; under such control, the times during which the core is saturated and causes the effective reactance drops can be adjusted so that a larger or smaller part of each power pulse will pass rather freely to the output. In turn, the voltage exhibited at the output will vary, and it can then be regulated to maintain a desired value by sensing it (sensing network 13) and comparing it with a reference value (reference network 14) in a comparator amplifier 15 and driving a transistor 16, which will relatedly control the amount of unidirectional biasing current induced in and allowed to flow through control winding $8_B$. When the sensed output voltage rises above a desired reference level, magnetic bias is automatically reduced, by lowering the current allowed to flow through winding $8_B$, and less of each power pulse is then passed to the output, with a resulting drop of the output voltage until the intended lower level is reached. Conversely, an unwanted fall in output results in automatically-controlled increase in current allowed to flow through winding $8_B$, such that combined effects of greater magnetic biasing and the magnetizing force produced by power pulses through the main winding result in earlier saturations and a greater portion of each power pulse being passed to the output, thereby raising the output voltage level.

So-called "magnetization curves", by which the afore-mentioned core saturation effects may be analyzed, appear in fig. 2, where H along the abscissa represents magnetic field intensity and B along the ordinate represents flux density. For one condition of the core, the pertinent portion of its magnetization curve, 17, is seen to involve a typical "knee" or saturation point $B_{S1}$ at a relatively high value of field intensity, $H_1$. Field intensity is dependent only on the number of turns per unit length of core material and on the effective current through those turns. A distinctly different condition of the core is

- 9 -                                    0123098

represented by curve 18, however, where a negative biasing has been effected by current allowed to flow through the control winding and the downwardly-shifted curve evidences a saturation point $B_{S2}$, which is at a lower value of field intensity, $H_2$, than the $H_1$ value already considered. Those different values of $H_1$ and $H_2$ can in turn be translated directly into terms of times, which it will take for unidirectional power pulses of uniform amplitude to cause saturation of the core material once each is first applied across the main winding $8_A$. That is, such a pulse, when applied to the negatively-biased reactor, will cause a field intensity $H_2$, and saturation, to be realized sooner than will be the case with a less-biased reactor requiring a greater field intensity, $H_1$, to achieve saturation. And, as has been said, the times needed to reach saturation determine just how much of what remains of each pulse will be passed on to the output stage of the converter. Biasing by the control winding is essentially self-powered, in that the power pulses induce appropriate electrical power into the control-winding circuitry; diode 19 aids in maintaining the desired directionality of flow, and control transistor 16 valves the current to establish appropriate relationships between the current and the sensed error, which is to be overcome for regulation purposes.

A sequence of two of the aforementioned type of uniform-amplitude uniform-width unidirectional power pulses, 20, is graphically portrayed in fig. 3; typically a repetition rate for such pulses may be about 40 kHZ, and the re-lated pulse width $20_A$ is therefore of exceedingly short duration. Reset pulses such as 21, of opposite polarity and like duration, may also be present in the transformation, although rectification ultimately separates them out. For a low level of core control biasing, graphically suggested by the relatively small average control-winding

current level $i_1$, a power pulse commencing at time $T_2$ will not effect saturation until time $T_5$, the delay $22_A$ then leaving only a relatively narrow remaining pulse of power 22 to be passed through the main winding for a short period $22_B$ once saturation has reduced its effective reactance at time $T_5$. For an intermediate level of control core biasing, suggested by current level $i_2$, a power pulse commencing at time $T_2$ will effect saturation somewhat earlier, at time $T_4$, leaving a somewhat wider remaining pulse of power 23 to be passed through the main winding and on to the output, where it will occasion a needed somewhat higher output voltage. For a yet greater biasing, suggested by current level $i_3$, the saturation occurs even more swiftly, and the remaining pulse of power 24, which is passed on to the output is a near maximum and occasions a comparable increase in output voltage. Good regulation in such a system is premised in part upon the expectation that the input power pulses 20 will be wide enough to accommodate effective "switching" and resulting changes in width of output power pulses (such as 22, 23 and 24) sufficient to allow for correction of whatever output voltages may be encountered, whether up or down. For such purposes, the converter may be so adjusted that a prescribed level of output voltage is normally achieved when there is bias to cause saturation at some intermediate time such as $T_4$.

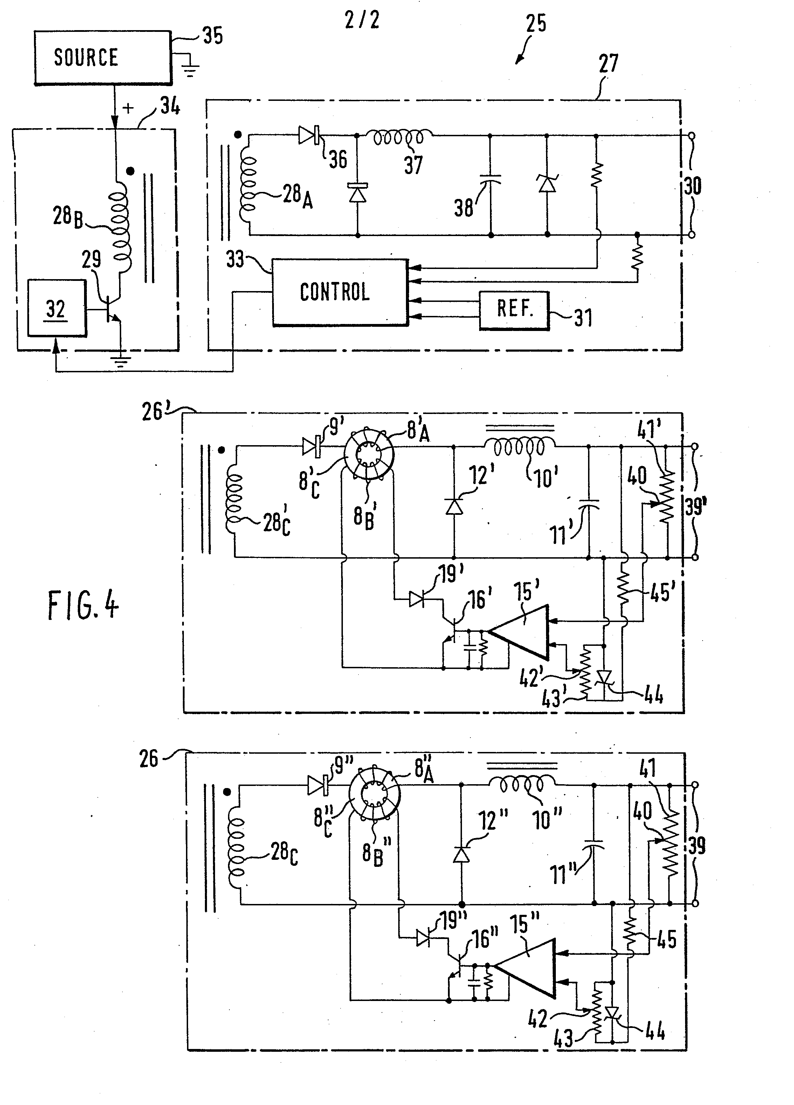

The multiple-output converter 25 illustrated in fig. 4 includes a pair of substantially identical single-ended channels 26 and 26', which achieve regulation in essentially the same way. Both are "derived" or auxiliary channels, however, in that the unitary power-supply system in which they are operated also includes a "main" regulated channel, 27, of another type, which influences them somewhat as well. Specifically, the main channel 27 includes in its input section a transformer secondary, $28_A$

which is inductively associated with the same transformer primary $28_B$, which serves both the input transformer secondaries $28_C$ and $28_{C'}$ of the derived channels 26 and 26'. Further, the main channel exercises a direct control over the signals, by which that primary $28_B$ is excited, through pulse-width-modulation of a transistorized switch 29. The regulation accomplished by that main channel is in accord with well-known prior techniques and involves comparisons of the output voltages appearing across its output terminals 30 with a voltage from a reference 31, there being a related automatic variation of widths of current pulses passed by transistor 29 by a pulse-width-modulator 32 in response to command from a control network 33, in which the output and reference voltages are compared. System supply to the common input section 34 is typically from a source 35 in the form of a battery or the like, and the pulse-width-modulating transistorized switching causes unidirectional current pulses to be drawn through primary winding $28_B$ and to induce power pulses like widths in each of the three secondary windings. Rectifying effects of diode 36 and filtering with the aid of inductance 37 and capacitor 38 are generally conventional in the main channel. In each of the derived channels, the input power pulses induced at the secondaries $28_C$ and $28_{C'}$ are necessarily likewise pulse-width-modulated in a manner, which suits the regulating requirements existing in the main channel, even though the output voltages at their terminals 39 and 39' may not require similar correction, or even any correction at all. However, each such auxiliary channel regulates itself, along the lines discussed with reference to the converter channel in fig. 1, and its regulation accommodates not only the changes in its own output voltage due to localized loading there but also any unwanted changes, which result from less isolated regulation in the main channel.

It will be recognized that many of the features and characteristics of regulated channels 26 and 26' are straightforward counterparts of what appears in fig. 1, and, in avoiding needless duplications of description, those elements whose construction and function are essentially like those already described with reference to fig. 1 are simply ascribed the same reference characters in fig. 1, distinguished by single-prime accents in the case of auxiliary channel 26' and double-prime accents in the case of auxiliary channel 26. Accordingly, in each auxiliary channel, the main reactor winding ($8_A{}'$, and $8_A{}''$) allows such portions of input power pulses to pass to the output as is enabled by biasing of a preferably toroidal saturable ferrite core ($8_C{}'$, and $8_C{}''$), under influence of the control winding ($8_B{}'$, and $8_B{}''$), and the output voltage, which is regulated there may be of value or level different from that at the outputs of the other channels. Moreover, that regulated level may be readily adjusted, independently, in each of the auxiliary channels. For the latter purposes, and having reference to channel 26 in particular, the companion channel 26' being similar, voltage related to voltage across the output terminals 39 may be sensed via an adjustable tap 40 of a resistive divider 41, and a reference voltage with which it may be compared may be taken from an adjustable tap 42 of a resistive divider 43 across a zener diode 44, which is also connected across the output terminals, in series with an appropriate resistance 45. Differences between the sensed and reference voltages are taken into account by the comparator amplifier (15', and 15'') and translated into base drive of the transistor (16', and 16'') governing flow of core-biasing currents.

In other applications of the present teachings, double-ended or "push-pull" type regulation may be effected with respect to both positive and negative power pulses. A common control winding and common error-sensing comparator and controller may be employed in such cases, although two separate cores would be utilized in each converter channel. Also, multiple-output converters need not involve a channel employing feedback, and, instead, the switching involved on the input side, to develop power pulses, may be at a fixed rate rather than width-modulated or other-wise variably controlled; in such instances, all channels may be of a "derived" type discussed with reference to channels 26 and 26' of fig. 4. It should therefore be understood that the specific embodiments and practices shown and described herein have been presented by way of disclosure, rather than limitation, and that various modifications, combinations and substitutions may be effected by those skilled in the art without departure in spirit or scope from this invention in its broader aspects and as set forth in the appended claims.

Patent Claims

1. Regulated electrical power supply apparatus, c h a r a c t e r i z e d by source means (34) producing successive unidirectional electrical power pulses, saturable-reactance means (8) including main ($8_A$) and control winding means ($8_B$) in association with magnetically-saturable core means, output means (37, 38, 30), means for applying said power pulses from said source means (34) to said output means through said main winding means ($8_A$), reference electrical signal means (14), means (15) for comparing the value of a reference signal of said reference signal means with values of electrical output signals of said output means and producing control signals characterizing differences between said values, and means (16) electrically driving said control winding means ($8_B$) so as to establish in said core means magnetic biasing related to said control signals and in manner operative to cause both saturation of said core means and markedly decreased inductive reactance for said main winding means ($8_A$) at such controlled times while said power pulses are being applied through said main winding means ($8_A$) that only so much power is received by said output means as maintains value of said electrical output signals at substantially said reference value.

2. Regulated electrical power supply apparatus as set forth in claim 1, c h a r a c t e r i z e d in that said source means (34) includes a d-c supply (35) and means (29) switching output from said supply to produce said power pulses at a substantially uniform high repetition rate.

3. Regulated electrical power supply apparatus as set forth in claim 2, c h a r a c t e r i z e d in that said means (34) for applying said power pulses applies said pulses through said main winding means ($8_A$) at a substantially uniform amplitude.

4. Regulated electrical power supply apparatus as set forth in claim 1, c h a r a c t e r i z e d  in that reference electrical signal means includes means electrically excited by said output and producing an adjustable reference voltage, wherein said values of said output signals and reference signals are related to voltages thereof.

5. Regulated electrical power supply apparatus as set forth in claim 1, c h a r a c t e r i z e d  in that said means driving said control winding means ($8_B$) in- cludes means (15) controllably biasing semiconductor val- ving (16) in circuit with said control winding means ($8_B$) and thereby controlling flow of current therethrough.

6. Regulated electrical power supply apparatus as set forth in claim 1, further c h a r a c t e r i z e d by means producing a second output of electrical signals, wherein said source means (34) produces said power pulses with variable widths as determined by feedback to said source means (34) from said means producing said second output.

7. Electrical power converter apparatus, c h a r a c - t e r i z e d  by a source (34) producing successive electrical power pulses at a relatively high repetition rate, and a plurality of output channels (27, 26', 26) for translating said power pulses into separate regulated output voltages, at least one of said channels comprising: a saturable-core unit (8) including main ($8_A$) and control winding means ($8_B$) in association with saturable-core material; an output stage (7); means ($28_B$; $28_A$, $28_C$, $28_{C'}$) for applying power pulses from said source (34) to said output stage through said main winding means ($8_A$); means (31) energized from said output stage producing a reference voltage; means (33) for comparing said reference voltage and an output voltage from said output stage and producing control signals characterizing differences therebetween; and means (32, 29) controlling the flow of current through said control winding means ($8_B$) in response to said control signals to cause both saturation of said core material and markedly decreased inductive reactance for said main winding means ($8_A$) at such controlled times while said power pulses from said source are being applied through said main winding means ($8_A$) that only so much power is received by said output stage as maintains said output voltage at a predetermined level.

8. Electrical power converter apparatus as set forth in claim 7, c h a r a c t e r i z e d in that said saturable-core unit (8) includes said material in the form of a toroidal core having winding turns thereabout forming said main and control winding means ($8_A$, $8_B$), wherein said output stage includes electrical filtering (37, 38), which smooths pulses of power applied thereto.

9. Electrical power converter apparatus as set forth in claim 8, c h a r a c t e r i z e d in that said means (31) producing a reference voltage includes a zener diode (44), and wherein at least one of said voltages is tapped from across an adjustable voltage divider (43) to permit independent adjustment of the voltage regulated by said one of said channels.

10. Electrical power converter apparatus as set forth in claim 7, c h a r a c t e r i z e d in that said source (34) produces said power pulses unidirectionally through the primary ($28_B$) of a transformer, wherein each of said channels includes a power input stage including a different secondary transformer winding ($28_A$, $28_C$, $28_{C'}$) coupled with said primary ($28_B$).

11. Electrical power converter apparatus as set forth in claim 1, c h a r a c t e r i z e d  in that another (27) of said channels comprises a linear regulator (33) including feedback means sensing output voltage of said other channel and pulse-width-modulating said power pulses produced by said source (34) so as to maintain said output voltage of said other channel at a substantially constant regulated level.

FIG.1

FIG.2

FIG.3

FIG.4